# EUROPÄISCHE PATENTSCHRIFT

(11) **EP 0 364 539 B1**
(45) Veröffentlichungstag und Bekanntmachung des Hinweises auf die Patenterteilung: **24.08.1994**
(21) Anmeldenummer: 89903718.8
(22) Anmeldetag: 13.03.1989
(51) Int. Cl.: G01N 21/31, G01N 21/74

(54) **ATOMABSORPTIONS-SPEKTROMETER**
ATOMIC ABSORPTION SPECTROMETER
SPECTROMETRE D'ABSORPTION ATOMIQUE

(30) Priorität: 18.03.1988 DE 3809212
(43) Veröffentlichungstag der Anmeldung: 25.04.1990
(73) Patentinhaber: BODENSEEWERK PERKIN-ELMER GMBH, D-88662 Überlingen (DE)
(72) Erfinder: ROGASCH, Klaus, Peter, D-7772 Uhldingen-Mühlhofen 1 (DE); TAMM, Rolf, D-7777 Salem 2 (DE)
(74) Vertreter: Grünecker, Kinkeldey, Stockmair & Schwanhäusser Anwaltssozietät
(86) Internationale Anmeldenummer: EP8900261
(87) Internationale Veröffentlichungsnummer: WO8908833

(56) Entgegenhaltungen:
- Spectroscopy Letters, Jahrgang 7, Nr. 8, 1975, Marcel Dekker (US) J.W. Robinson et al.: "A metal specific atomic absorption detector for gas chromatography - its use in the determination of lead alkyls in gasoline", Seiten 491-507, siehe Figur 1
- Analytical Chemistry, Jahrgang 52, Nr. 8, Juli 1980, (Columbus, Ohio, US) P.R. Liddell et al.: "Application of a modulated magnetic field of a graphite furnace in Zeeman effect atomic absorption spectrometray" Seiten 1256-1260, siehe Figur 1 (In der Anmeldung erwähnt)
- Journal of Analytical Chemistry of the USSR, Jahrgang 32, Nr. 2, Februar 1977 L.F. Grushko et al.: "Some features of a tubular graphite atomizer for atomic-absorption spectrometry", Seiten 218-223, siehe Figur 1
- Applied Spectroscopy, Jahrgang 27, Nr. 6, November-Dezember 1973 D.L. Dick et al.: "Modification of an atomic absorption unit for dual beam, background correction measurement", Seiten 467-470, siehe Figur 1
- Patent Abstracts of Japan, Band 4, Nr. 100 (P-19)(582), 18. Juli 1980 & JP, A, 55058419

## Beschreibung

### Technisches Gebiet

Die Erfindung betrifft ein Atomabsorptions - Spektrometer mit elektrothermischer Atomisierung der Probe und Untergrundkompensation durch Ausnutzung des Zeeman Effektes,
enthaltend:
(a) einen Ofen für die elektrothermische Atomisierung der Probe, der
   - eine die Probe aufnehmende, längs einer ersten Achse verlaufende Bohrung aufweist, durch welche das Meßlichtbündel hindurchtritt,
   - Kontaktstücke aufweist, die sich längs einer senkrecht zu der ersten Achse verlaufenden zweiten Achse auf beiden Seiten der Bohrung erstrecken, und
   - an den Kontaktstücken zwischen Kontakten gehalten ist, die gleichachsig zu den Kontaktstücken angeordnet und mit Stromzuleitungen verbunden sind und über welche ein Heizstrom durch den Ofen quer zur ersten Achse der Bohrung zuführbar ist,
(b)- einen schaltbaren Magneten, der Polschuhe mit fluchtenden Durchbrüchen zum Durchtritt des Meßlichtbündels aufweist zur Erzeugung eines Magnetfeldes in dem Ofen, das parallel zur Laufrichtung des Meßlichtbündels verläuft, so daß beim Einschalten des Elektromagneten ein longitudinaler Zeeman-Effekt der Absorptionslinien der Probe eintritt.

Atomabsorptions - Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Meßlichtbündel auf einen photoelektrischen Detektor geleitet. Im Strahlengang dieses Meßlichtbündels ist eine Atomisierungsvorrichtung angeordnet. In dieser Atomisierungsvorrichtung wird die zu untersuchende Probe atomisiert, so daß ihre Bestandteile in atomarem Zustand vorliegen. Das Meßlichtbündel enthält die Resonanzlinien des gesuchten Elements. Diese Resonanzlinien des Meßlichtbündels werden von den Atomen des gesuchten Elements in der Atomwolke absorbiert, während im Idealfall die anderen in der Probe enthaltenen Elemente das Meßlichtbündel nicht beeinflußen. Das Meßlichtbündel erfährt daher eine Schwächung, die ein Maß für die Anzahl der im Weg des Meßlichtbündels befindlichen Atome des gesuchten Elements und damit je nach dem angewandten Atomisierungsverfahren ein Maß für die Konzentration oder die Menge des gesuchten Elementes in der Probe darstellt. Die Absorption, die das Meßlichtbündel erfährt, wird aber nicht nur durch die Atome des gesuchten Elements hervorgerufen. Es gibt eine "Untergrundabsorption", beispielsweise infolge der Absorption des Lichts durch Moleküle. Diese Untergrundabsorption muß insbesondere bei hochempfindlichen Messungen kompensiert werden.

Als Atomisierungsvorrichtung kann eine Flamme dienen, in welche eine Probe als Lösung eingesprüht wird. Für hochempfindliche Messungen verwendet man aber vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schließlich atomisiert. In dem Ofen bildet sich dann eine "Atomwolke" aus, in welcher das gesuchte Element in atomarer Form vorliegt. Das Meßlichtbündel wird durch diesen Ofen hindurchgeleitet. Diese Öfen können verschiedene Form haben. Sie werden üblicherweise aus Graphit hergestellt.

Zur Untergrundkompensation wird der "Zeeman - Effekt" ausgenutzt. Wenn an die absorbierenden Atome in der atomisierten Probe ein Magnetfeld angelegt wird, dann erfolgt eine Aufspaltung und Verschiebung der Resonanzlinien dieser Atome. Die Resonanzlinien der Atome fallen dann nicht mehr mit den Spektrallinien des Meßlichtbündels zusammen und es erfolgt im Grenzfall keine atomare Absorption mehr. Dadurch kann zwischen nicht-atomarer Untergrundabsorption, die auch bei anliegendem Magnetfeld auftritt, und echter Atomabsorption, die bei nichtanliegendem Magnetfeld der Untergrundabsorption überlagert ist, unterschieden werden.

Die vorliegende Erfindung betrifft ein Atomabsorptions - Spektrometer, bei welchem die Atomisierung der Probe durch die geschilderte elektrothermische Atomisierung bewirkt wird und bei welcher zur Untergrundkompensation in der ebenfalls geschilderten Weise der Zeeman - Effekt ausgenutzt wird.

### Zugrundeliegender Stand der Technik

Durch die DE-AS 1 964 469 ist ein Atomabsorptions Spektrometer bekannt, bei welchem die Strahlung von einer einzigen, als Linienstrahler ausgebildeten Strahlungsquelle ausgeht, deren durch die Probe tretende Strahlung unter Ausnutzung des longitudinalen Zeeman - Effektes frequenzmoduliert wird. Bei diesem bekannten Atomabsorptions - Spektrometer sitzt eine Hohlkathodenlampe zwischen den Polschuhen eines Elektromagneten. Einer der Polschuhe weist eine Bohrung auf, durch welche das Meßlichtbündel hindurchtritt. Das Meßlichtbündel tritt dann durch eine als Atomisierungsvorrichtung dienende Flamme und einen Monochromator und fällt auf einen Photoelektrischen Detektor. Der Elektromagnet ist ein- und ausschaltbar, wobei aus der Differenz der Signale bei aus-und eingeschaltetem Elektromagneten die atomare, hinsichtlich der Untergrundabsorption kompensierte Absorption der Probenatome bestimmt werden kann. Die Wicklungen des Elektromagneten sitzen dort auf den Polschuhen.

Bei dem bekannten Atomabsorptions - Spektrometer werden die Emissionslinien der linienemittierenden Lichtquelle durch den Zeeman - Effekt periodisch verschoben und damit das emittierte Licht frequenzmoduliert.

Durch die DE-PS 2 165 106 ist es bekannt, das Magnetfeld eines ein- und ausschaltbaren Elektromagneten statt an die Lichtquelle an die Atomisierungsvorrichtung anzulegen, also an die atomisierte Probe. Die Atomisierungsvorrichtung ist dabei eine Flamme. Das Magnetfeld wird senkrecht zur Laufrichtung des Meßlichtbündels angelegt. Es erfolgt hier eine Aufspaltung der Absorptionslinien infolge des "transversalen" Zeeman - Effektes, was wiederum eine Relativverschiebung der Emissionslinien des Meßlichtbündels und der Absorptionslinien der Probe bewirkt. Durch Ein- und Auschalten des Magnetfeldes kann wieder zwischen atomarer Absorption durch die Atome des gesuchten Elements und unspezifischer Untergrundabsorption unterschieden werden.

Bei der Anwendung des transversalen Zeeman - Effektes erfolgt die Aufspaltung einer Spektrallinie in eine zentrale Linie, deren Wellenlänge der unverschobenen Wellenlänge der betreffenden Linie bei abgeschaltetem Magnetfeld entspricht, und zwei demgegenüber zu höheren und zu niedrigeren Wellenlängen hin verschobenen Seitenlinien. Die zentrale Linie und die Seitenlinien sind unterschiedlich polarisiert. Man kann daher den Einfluß der zentralen Linie durch einen Polarisator eliminieren. Ein solcher Polarisator bringt jedoch einen Lichtverlust von 50%.

Als Atomisierungsvorrichtungen sind Öfen zur elektrothermischen Atomisierung der Probe bekannt. Als solche dienen beispielsweise Graphitrohre, die zwischen ringförmigen Kontakten gehalten sind und durch welche das Meßlichtbündel in Längsrichtung hindurchtritt. Über die ringförmigen Kontakte wird ein starker elektrischer Strom durch das Graphitrohr geleitet. Die in das Graphitrohr eingebrachte Probe wird dadurch atomisiert und bildet innerhalb des Graphitrohres eine "Atomwolke". In dieser Atomwolke liegt das gesuchte Element in atomarer Form vor. Solche mit einem Graphitrohr arbeitende Atomisierungsvorrichtungen sind beispielsweise aus der DE-PS-23 14 207 und der DE-PS 21 48 783 bekannt.

Es ist auch bekannt, die ringförmigen Kontakte, zwischen denen das in Längsrichtung vom Strom durchflossene Graphitrohr gehalten wird, Mantelförmig auszubilden, so daß sie einen das Graphitrohr enthaltenden, bis auf einen Abstandsspalt geschlossenen Hohlraum bilden (EP-A-95 549).

Es ist auch bekannt, bei solchen Atomisierungsvorrichtungen, die mit einem in Längsrichtung von Strom durchflossenen Graphitrohr arbeiten, eine Kompensation der Untergrundabsorption durch Ausnutzung des Zeeman Effektes vorzunehmen. Zu diesem Zweck wird durch einen Elektromagneten ein quer zur Laufrichtung des Meßlichtbündels gerichtetes, Wechselmagnetfeld an das Graphitrohr angelegt. Dabei wird ebenfalls der transversale Zeeman - Effekt hervorgerufen, was einen Polarisator im Strahlengang bedingt.

Es sind Öfen für die elektrothermische Atomisierung einer Probe in einem Atomabsorptions - Spektrometer bekannt, bei denen der Strom nicht in Längsrichtung durch ein Graphitrohr hindurchgeleitet wird sondern in Umfangsrichtung. Beispiele hierfür sind die US-PS 4 407 582 und die DE-OS 35 34 417 sowie eine im wesentlichen inhaltsgleiche Veröffentlichung in "Analytical Chemistry" 58 (1986), 1973.

Durch einen Aufsatz von M.T.C. deLoos-Vollebregt und L. de Galan "Construction and performance of an a.c. modulated magnet for Zeeman atomic absorption spectroscopy" in "Spectrochimica Acta" Bd. 358 (1980), pp 495 bis 506 ist eine Anordnung bekannt, bei welcher ein Graphitofen, dem Strom quer zur Laufrichtung des Meßlichtbündels zugeführt wird, in einem longitudinalen magnetischen Feld eines Elektromagneten angeordnet ist. Die Polschuhe des Elektromagneten sind dabei in Längsrichtung, also in Richtung des Magnetfeldes durchbohrt, so daß dort das Meßlichtbündel hindurchtreten kann. Dabei ist der Ofen zwischen seitlichen Kontakten gehalten und an den Magneten geschraubt.

Eine ähnliche Anordnung ist beschrieben in einem Aufsatz in "Analytical Chemistry" 52 (1980), 1256-1260.

Bei der Ausnutzung des longitudinalen Zeeman-Effektes ergibt sich das Problem, daß der Luftspalt des Elektromagneten relativ groß sein muß, damit der rohrförmige Graphitofen mit seiner gesamten Länge zwischen den Polflächen untergebracht werden kann. Der Graphitofen muß gegen Luftsauerstoff durch Schutzgas abgeschirmt sein.

### Offenbarung der Erfindung

Der Erfindung liegt die Aufgabe zugrunde, bei einem Atomabsorptions-Spektrometer der eingangs genannten Art das Nutzsignal gegenüber bekannten, mit transversalem Zeeman-Effekt arbeitenden Zeeman-Spektrometern durch die Anwendung des longitudinalen Zeeman-Effektes zu verbessern, aber gegenüber bekannten, mit dem longitudinalen Zeeman-Effekt arbeitenden Zeeman-Spektrometern eine Verringerung des Luftspaltes des Magneten bei wirksamer Abschirmung des Graphitofens gegen Luftsauerstoff zu ermöglichen.

Erfindungsgemäß wird diese Aufgabe durch die Merkmale des Anspruchs 1 gelöst.

Nach der Erfindung sitzt einer der Kontakte, zwischen denen der Ofen gehalten ist, an einem Kontaktträger, der unmittelbar an den Polschuhen gehaltert ist. Der andere Kontakt ist an einem zum Wechsel des Ofens beweglichen Block gehaltert. Die Kontakte umschließen den Ofen samt der seitlichen Kontaktstücke, so daß ein Hohlraum zur Einleitung von Schutzgas gebildet wird. Kontakt- und Ofenanordnung ist sehr kompakt und kann in einem engen Luftspalt zwischen den Polschuhen untergebracht werden. Die von dem Ofen entwickelte Wärme wird durch die Abschirmscheibe von den Polschuhen ferngehalten, Es hat sich gezeigt, daß auf diese Weise der Ofen in einem engen Luftspalt untergebracht werden kann.

Eine weitere Ausgestaltung der Erfindung ist Gegenstand des Unteranspruchs.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt schematisch den Aufbau eines Atomabsorptions - Spektrometers, bei welchem die Untergrundabsorption durch Ausnutzung des longitudinalen Zeeman - Effektes kompensiert wird.
- Fig.2: ist eine Seitenansicht, teilweise im Schnitt des Elektromagneten, durch welchen der longitudinale Zeeman - Effekt erzeugt wird, und eines Ofens zur elektrothermischen Atomisierung einer Probe im Luftspalt des Elektromagneten.
- Fig.3: zeigt einen Schnitt längs der Linie III - III von Fig.2.
- Fig.4: zeigt für sich einen Kontaktträger, der einen der Kontakte für die Halterung des Ofens und die Stromzufuhr zu dem Ofen trägt, und die mit dem Kontaktträger einen integralen Bauteil bildenden Spulenhalterungen in einer Seitenansicht ähnlich Fig.2.
- Fig.5: zeigt eine Draufsicht des Bauteils von Fig.4.
- Fig.6: zeigt eine Ansicht ähnlich Fig.2 eines Kontaktes, mittels dessen der Ofen auf einer Seite gehalten ist.
- Fig.7: zeigt einen Schnitt längs der Linie VII - VII von Fig.6.
- Fig.8: zeigt den gegenüberliegenden Kontakt in einer Ansicht ähnlich Fig. 6.
- Fig.9: zeigt für sich in einer Ansicht ähnlich Fig. 3 und teilweise im Schnitt einen Ofen zur elektrothermischen Atomisierung der Probe in dem Atomabsorptions - Spektrometer von Fig. 1 bis 3.
- Fig.10: zeigt eine Draufsicht des Ofens von Fig. 9.
- Fig.11: zeigt eine Ansicht des Ofens, teilweise im Schnitt, von links in Fig. 9 gesehen.

### Bevorzugte Ausführung der Erfindung

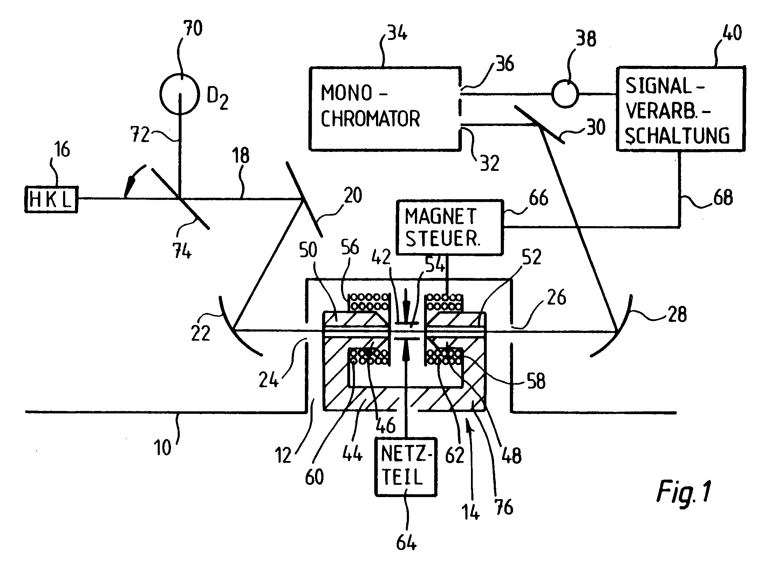

Fig.1 ist eine schematische Darstellung des gesamten Atomabsorptions - Spektrometers.

Das Atomabsorptions - Spektrometer weist ein Gehäuse 10 auf, in welchem die Lampen, das optische System und der photoempfindliche Detektor angeordnet sind. Das Gehäuse 10 bildet einen Probenraum 12. In dem Probenraum 12 ist eine Atomisierungsvorrichtung 14 angeordnet.

Das Atomabsorptions - Spektrometer weist als eine erste Lichtquelle 16 eine Hohlkathodenlampe 16 auf. Die Lichtquelle 16 emittiert ein Linienspektrum, das den Resonanzlinien eines bestimmten, gesuchten Elements entspricht. Von der Lichtquelle 16 geht ein Meßlichtbündel 18 aus. Das Meßlichtbündel 18 wird von einem Planspiegel 20 umgelenkt und von einem Hohlspiegel 22 durch eine Öffnung 24 des Gehäuses 10 hindurch in der Mitte des Probenraumes gesammelt. Das Meßlichtbündel tritt dann durch eine mit der Öffnung 24 fluchtenden Öffnung 26 des Gehäuses 10 und fällt auf einen zweiten Hohlspiegel 28. Von dem zweiten Hohlspiegel 28 wird das Meßlichtbündel 18 über einen Planspiegel 30 auf dem Eintrittsspalt 32 eines Monochromators 34 fokussiert. Hinter einem Austrittsspalt 36 des Monochromators 34 sitzt ein photoelektrischer Detektor 38. Das Signal des photoelektrischen Detektors 38 beaufschlagt eine Signalverarbeitungs - Schaltung 40.

Die Atomisierungsvorrichtung 14 enthält einen Ofen zur elektrothermischen Atomisierung, von welchem in Fig.1 nur der eigentliche Ofenkörper 42 dargestellt ist, und einen ein- und ausschaltbaren Elektromagneten 44 zur Erzeugung eines Magnetfeldes am Ort der Probe. Der Elektromagnet 44 weist zwei fluchtende Polschuhe 44 und 46 auf, zwischen denen der Ofenkörper 42 sitzt. In den Polschuhen 46 und 48 sind fluchtende Bohrungen 50 und 52 angebracht. Die Bohrungen 50 und 52 fluchten mit einer Längsbohrung 54 des Ofenkörpers 42. Das Meßlichtbündel 18 verläuft durch die Bohrungen 50 und 52 und durch die Längsbohrung des Ofenkörpers. Auf den Polschuhen 50 und 52 sitzen Spulenhalterungen 56 bzw. 58. Auf diese Spulenhalterungen 56 und 58 sind Spulen 60 bzw. 62 des Elektromagneten 44 gewickelt. Mit 64 ist ein Netzteil bezeichnet, welches den Strom durch den Ofenkörper 42 steuert. Wie angedeutet, wird der Strom quer zur Laufrichtung des Meßlichtbündels 18 zugeführt und fließt in Umfangsrichtung durch den rohrförmigen Ofenkörper 42. Der Elektromagnet 44 ist von einer Magnetsteuerung 66 gesteuert, derart, daß das Magnetfeld abwechselnd ein- und ausgeschaltet wird. Das Magnetfeld des Elektromagneten 44 verläuft am Ort der Probe innerhalb des Ofenkörpers in Laufrichtung des Meßlichtbündels 18. Bei eingeschaltetem Magnetfeld wird daher an den Probenatomen der longitudinale Zeeman Effekt erzeugt. Das bedeutet, daß die Absorptionslinien der Probenatome in jeweils zwei Linien aufgespalten werden, die gegenüber der ungestörten ursprünglichen Absorptionslinie verschoben sind. Bei der Wellenlänge der ursprünglichen Absorptionslinie erfolgt keine atomare Absorption in der Probe mehr. Daher absorbieren auch die Atome des gesuchten Elements das Meßlichtbündel 18 nicht mehr, da dieses Meßlichtbündel nur die unverschobenen für das Element charakteristischen Resonanzlinien enthält. Bei eingeschaltetem Magnetfeld wird daher nur die Untergrundabsorption gemessen. Aus den Messungen bei ein- und ausgeschaltetem Magnetfeld kann der hinsichtlich der Untergrundabsorption korrigierte Anteil der echten Atomabsorption bestimmt werden. Der Takt der Ein- und Ausschaltung des Elektromagneten 44 wird zu diesem Zweck auf die Signalauswertungs - Schaltung 40 gegeben, wie durch eine Leitung 68 angedeutet ist. Durch die Anwendung des longitudinalen Zeeman - Effektes wird ein Polarisator im Strahlengang entbehrlich und das Nutzsignal verbessert.

In dem Gehäuse 10 sitzt eine zweite Lichtquelle 70, die ein Kontinuum emittiert. Diese zweite Lichtquelle ist eine Deuteriumlampe. Die zweite Lichtquelle 70 sendet ein Lichtbündel 72 aus. Dieses Lichtbündel 72 von der zweiten Lichtquelle 70 kann über einen in den Strahlengang wahlweise einschaltbaren Strahlenteiler 74 in den Strahlengang des Meßlichtbündels 18 eingeschwenkt werden. Die erste und die zweite Lichtquelle 16 bzw. 70 können in schneller Folge abwechselnd eingeschaltet werden, so daß abwechselnd ein Meßlichtbündel 18 mit einem Linienspektrum von der ersten Lichtquelle (Hohlkathodenlampe) 16 oder ein Meßlichtbündel mit einem Kontinuum von der zweiten Lichtquelle (Deuteriumlampe) durch die in dem Ofenkörper gebildete Atomwolke tritt. Bei dieser Betriebsweise mit eingeschaltetem Strahlenteiler 74 ist der Elektromagnet ausgeschaltet. Die Untergrundabsorption kann dann dadurch bestimmt werden, daß abwechselnd die Absorption der sehr schmalen Spektrallinie der ersten Lichtquelle und die Absorption eines relativ zu der Spektrallinie breiten, durch den Monochromator 34 bestimmten Bandes von Kontinuumsstrahlung gemessen wird. Der Wechsel zwischen der ersten Lichtquelle 16 und der zweiten Lichtquelle 70 erfolgt mit einer Frequenz von mehr als 500 Hertz, nämlich 1000 Hertz. Die Arbeitsweise mit einer ein- Kontinuum emittierenden zweiten Lichtquelle als Referenzlichtquelle gestattet es, relativ schnelle Änderungen der Untergrundabsorption zu erfassen, die bei der Ausnutzung des Zeeman-Effekts mittels des Elektromagneten 44 nicht erfaßt werden können. Der Elektromagnet 44 ist relativ träge, so daß der Frequenz des Wechsels zwischen Atomabsorptionsmessung und Untergrundmessung Grenzen gesetzt sind. Durch die Anwendung des longitudinalen Zeeman - Effektes ist kein Polarisator im Strahlengang erforderlich. Nach Abschaltung des Elektromagneten kann daher das Atomabsorptions Spektrometer mit einer ein Kontinuum emittierenden zweiten Lichtquelle 70 arbeiten, ohne daß eine doppelte Lichtschwächung durch einen Polarisator und zusätzlich durch den Strahlenteiler 74 erfolgen würde.

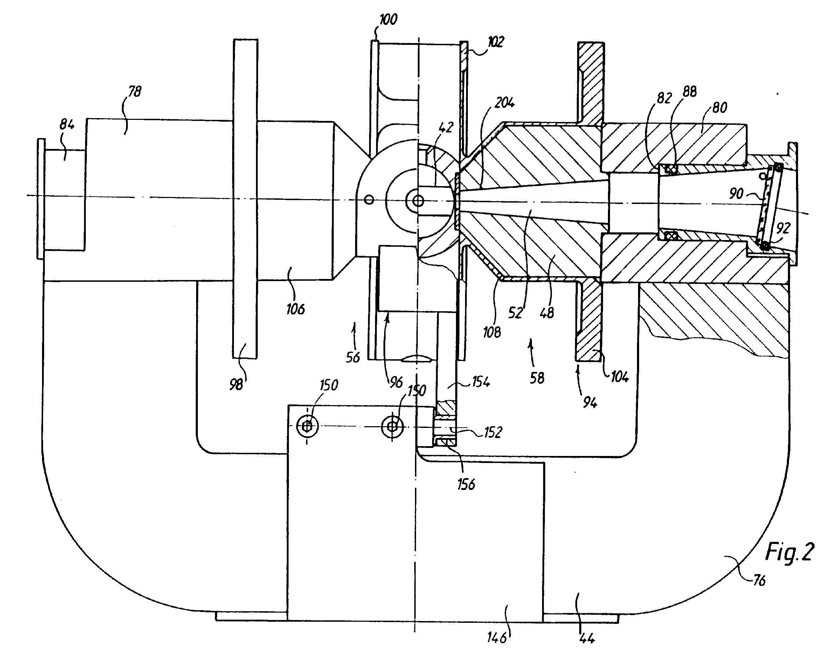

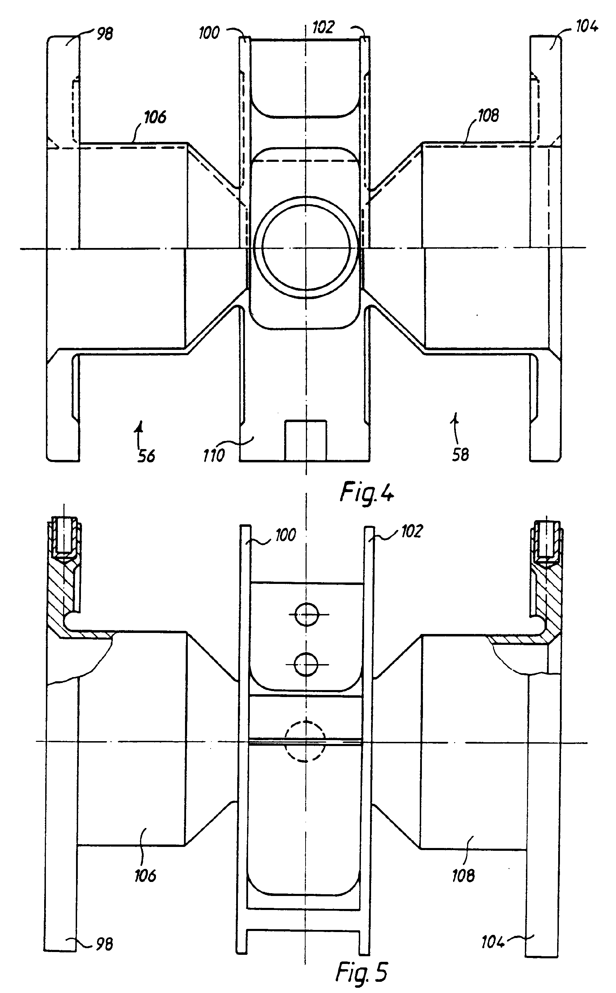

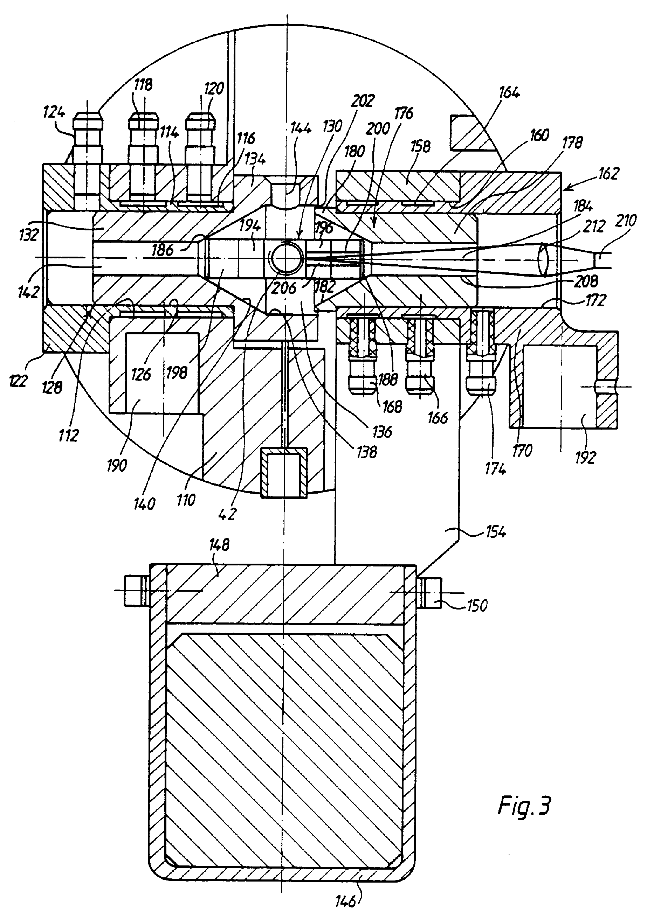

Der konstruktive Aufbau der Atomisierungsvorrichtung mit dem Elektromagneten 44 und dem Ofen ist in Fig.2 und 3 im einzelnen dargestellt.

Der Elektromagnet 44 weist einen u-förmigen magnetischen Rückschluß 76 aus lamelliertem Eisen und fluchtende Polschuhe 46,48 auf. Die Polschuhe 46 und 48 sind zylindrisch und verjüngen sich an den einander zugewandten Enden kegelstumpfförmig. Die Polschuhe 46 und 48 sitzen an ebenfalls fluchtenden Endstücken 78 bzw. 80, die an den Schenkeln des u-förmigen magnetischen Rückschlusses 76 angebracht sind und von diesen nach innen ragen. Durch die Polschuhe 46 und 48 und die Endstücke 78 und 80 erstrecken sich die fluchtenden Durchbrüche 50 bzw. 52. In den Polschuhen 46 und 48 haben die Durchbrüche 50 bzw. 52 konische Innenwandungen, um die Fokussierung des Meßlichtbündels auf die Mitte des Ofenkörpers 42 zu ermöglichen. Im Bereich der Endstücke 78 und 80 bilden die Durchbrüche 50 bzw. 52 Schultern 82. In die Durchbrüche 50 und 52 sind Fensterfassungen 84 bzw 86 eingesetzt und durch O-Ringe 88 abgedichtet. In den Fensterfassungen 84 und 86 sitzen Fenster 90, die zur Vermeidung von Reflexen schräg in der Fensterfassung 84 bzw. 86 angeordnet sind und durch Dichtringe 92 gehalten werden.

Auf den Polschuhen 46 und 48 sitzt ein integraler Bauteil 94 aus einem unmagnetischen Werkstoff wie Aluminium. Dieser Bauteil bildet einerseits die Spulenhalterungen 56 und 58, auf welche die Magnetspulen 60 bzw. 62 gewickelt sind, und andererseits einen Kontaktträger, 96, welcher einen der Kontakte trägt, zwischen denen der Ofen gehalten wird. Die Magnetspulen 60 und 62 sind in Fig.2 und 3 der Deutlichkeit halber nicht eingezeichnet,

Die Spulenhalterungen 56 und 58 sind von spulenförmigen Teilen mit zwei Flanschen 98 und 100 bzw. 102 und 104 und Nabenteilen 106 bzw. 108 gebildet. Die Nabenteile 106 und 108 sind an die Form der Polschuhe 46 bzw. 48 angepaßt. Zwischen den einander zugewandten Flanschen 100 und 102 der beiden Spulenhalterungen 56 und 58 sitzt ein Block 110 mit einer Bohrung 112. In der Bohrung 112 sitzt ein Einsatz 114 mit mäanderförmigen Nuten 116 auf seiner Außenfläche, die zusammen mit der Innenfläche der Bohrung 112 einen Kühlkanal bilden. Dieser Kühlkanal ist mit einem Einlaß 118 und einem Auslaß 120 für eine Kühlflüssigkeit verbunden. Der Einsatz weist einen Kopfteil 122 auf, an welchem ein Schutzgaseinlaß 124 vorgesehen ist. Durch den Einsatz 114 erstreckt sich eine zentrale Axialbohrung 126, die an ihrem in Fig.3 linken Ende geschlossen ist. In dieser Axialbohrung sitzt ein Kontakt 128, durch welchen ein Ofen 130 für die thermoelektrische Atomisierung auf der einen Seite gehalten ist und über welchen auch die Stromzufuhr zu dem Ofen 130 erfolgt.

Der Kontakt 128 weist einen Schaft 132 auf, der in der Axialbohrung 126 sitzt, und einen Kopf 134. Der Kopf 134 weist in seiner Stirnfläche eine Ausnehmung 136 auf. Diese Ausnehmung 136 ist angrenzend an die Stirnfläche zunächst in einem Abschnitt 138 zylindrisch und verengt sich dann konisch in einem Abschnitt 140. In dem Schaft 132 verläuft eine zentrale Axialbohrung 142, die auf dem Grund der Ausnehmung 136 mündet. In dem zylindrischen Abschnitt 138 ist in dem Kopf 134 oben in Fig.3 eine radiale Eingabeöffnung 144 gebildet, durch welche Probe in den Ofen eingegeben werden kann.

Der magnetische Rückschluß 76 des Elektromagneten 44 ist von einem im Querschnitt u-förmigen Blechteil 146 umgeben, in welchem ein Lagerteil 148 durch Bolzen 150 gehalten ist. An einem Zapfen 152 des Lagerteils ist ein Schwenkarm 154 über eine Lagerbuchse 156 schwenkbar gelagert. An dem Schwenkarm 154 sitzt ein beweglicher Block 158. Der Block 158 weist ähnlich wie der Block 110 eine Bohrung 160 auf. In der Bohrung 160 sitzt ein Einsatz 162 ähnlich dem Einsatz 114. Der Einsatz 162 hat auf seiner Außenfläche mäanderförmige Nuten 164, die mit der Innenfläche der Bohrung 160 einen Kühlkanal bilden. Dieser Kühlkanal ist an seinen Enden mit einem Einlaßanschluß 166 und einem Auslaßanschluß 168 für Kühlflüssigkeit verbunden. Der Einsatz 162 hat einen Kopf 170. Eine zentrale Axialbohrung 172 erstreckt sich durch den Einsatz 162 und den Kopf 170. Die Axialbohrung 172 ist auf der in Fig.3 rechten Seite durch ein Fenster verschlossen. In die Axialbohrung 172 mündet ein Schutzgasanschluß 174. In der Axialbohrung 172 sitzt ein Kontakt 176. Der Kontakt 176 hat einen zylindrischen Schaft 178 und einen flachen Kopf 180. In der Stirnfläche des Kopfes 180 ist eine konische Vertiefung 182 gebildet. Die Vertiefung 182 entspricht ungefähr der Vertiefung 140. In dem Schaft 178 des Kontaktes 176 verläuft eine zentrale Axialbohrung 184, ähnlich der Bohrung 142.

In der Arbeitsstellung des Schwenkarmes 154, wie sie in Fig.3 dargestellt ist, wird der Ofen 130 mit konischen Kontaktflächen 186 und 188 zwischen den Kontakten 128 und 176 gehalten. Die Achsen der Kontakte 128 und 176 fluchten dann. Über die Blöcke 110 und 158, die Einsätze 114 und 162 und die Kontakte 128 und 176 wird auch der Strom auf den Ofen 130 geleitet. Zu diesem Zweck sind der Block 110 und der Einsatz 162 mit Steckanschlüssen 190 bzw. 192 für Hochstromkabel versehen.

Der Ofen 130 enthält den eigentlichen Ofenkörper 42, der am besten in Fig.2 erkennbar ist. Längs des Ofenkörpers 42 verlaufen diametral gegenüberliegende Kontaktrippen 194 und 196, die in Fig.3 erkennbar sind. An die Kontaktrippen 194 und 196 schließen sich im wesentlichen zylindrische Kontaktstücke 198 und 200 an, die mit den konischen Kontaktflächen 186 und 188 zwischen den Kontakten 128 und 176 gehalten sind.Die Achsen der Kontaktstücke 198 und 200 liegen also fluchtend mit den Achsen der Kontakte 128 und 176 in der Papierebene von Fig.3 und senkrecht zu der mit dem Meßlichtbündel 18 fluchtenden Achse des Ofenkörpers 42. Senkrecht zu diesen beiden Achsen, also oben in Fig.2 und 3 ist in dem Ofenkörper 42 eine Eingabeöffnung vorgesehen, die mit der Eingabeöffnung 144 fluchtet und durch welche Probe in den Ofen 130 eingebracht werden kann.

Die Kontakte 128 und 176 bilden mit ihren Ausnehmungen 136 und 168 einen Hohlraum, der den Ofen 130 enthält. Die Kontakte 128 und 176 sind dabei nur durch einen relativ schmalen Trennspalt 202 voneinander getrennt. Durch eine (nicht dargestellte) pneumatische Schwenkvorrichtung kann der Schwenkarm 154 im Uhrzeigersinn in Fig. 3 verschwenkt werden. Das ist in Fig. 3 durch einen Pfeil angedeutet. Damit wird der Block 158 mit dem Einsatz 162 und dem Kontakt 176 zurückgeschwenkt und der Ofen 130 zugänglich. Auf diese Weise kann ein Austausch des Ofens 130 erfolgen. Über die Schutzgasanschlüsse 124 und 174 wird ein Schutzgas zugeführt. Dieses Schutzgas strömt über die Bohrung 126 bzw. 172 und die Axialbohrungen 142 bzw. 184 zu den Kontaktstücken 198 bzw. 200 des Ofens 130. Das Schutzgas wird dann über noch zu beschreibende Kanäle im Ofen 130 verteilt. Die Kontakte 128 bzw. 176 sowie der Ofen 130 sind aus Graphit hergestellt. Das Schutzgas verhindert den Zutritt von Luftsauerstoff zu dem Ofen 130 beim Aufheizen und damit ein Verbrennen des Ofens 130.

Wie aus Fig. 2 ersichtlich ist, sitzt zwischen dem Kontakt 128 und der Stirnfläche des Polschuhs 48 eine Abschirmscheibe 204 mit einem zentralen Durchbruch für das Meßlichtbündel. Die Abschirmscheibe 204 besteht aus pyrolytischem Kohlenstoff mit einer hohen Wärmeleit- fähigkeit in der Ebene der Abschirmscheibe 204 und einer schlechten Wärmeleitfähigkeit senkrecht zu dieser Ebene. Auf diese Weise wird der Polschuh 48 gegen die hohen Temperaturen des Ofens 130 und des Kontaktes 128 abgeschirmt.

Die Axialbohrungen 172 und 184 in dem Einsatz 162 und dem Kontakt 176 sowie ein Schutzgaskanal 206 in dem Kontaktstück 200 und der Kontaktleiste 196 dienen gleichzeitig zur Aufnahme eines Pyrometerstrahlenganges 208, in welchem von einem Strahlungsdetektor 210 mittels eines Abbildungssystems 212 ein Stück der Wandung des Ofenteils 42 beobachtet wird. Das Signal des Strahlungsdetektors 210 liefert ein Maß für die Temperatur des Ofenteils 42 und gestattet damit eine Regelung der Ofentemperatur.

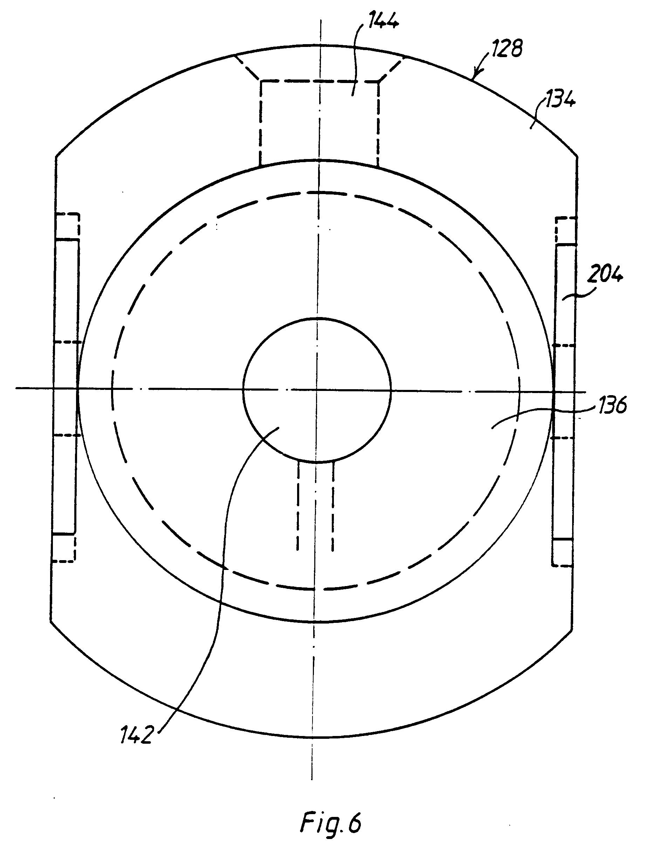

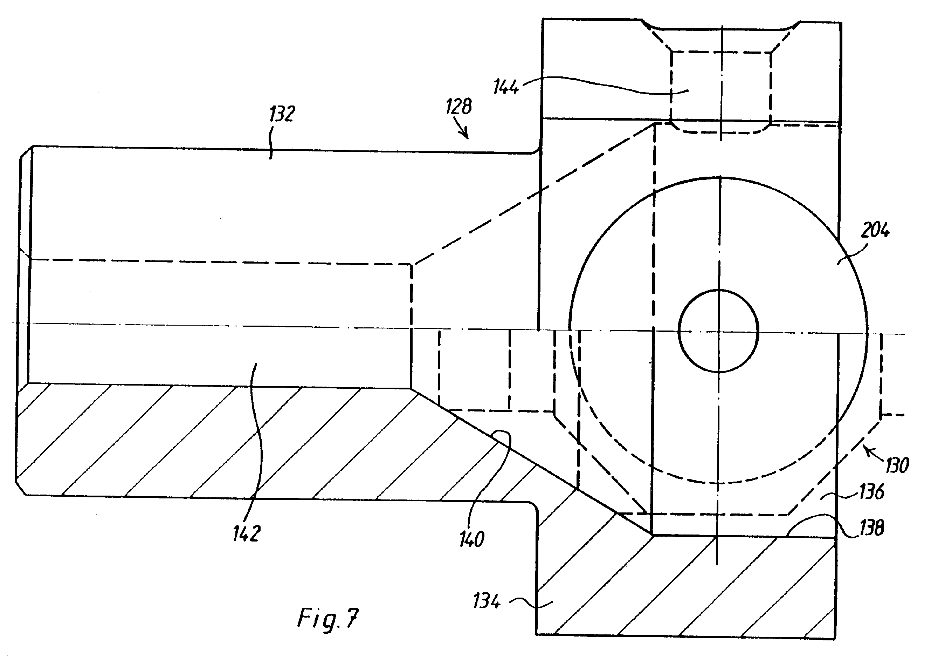

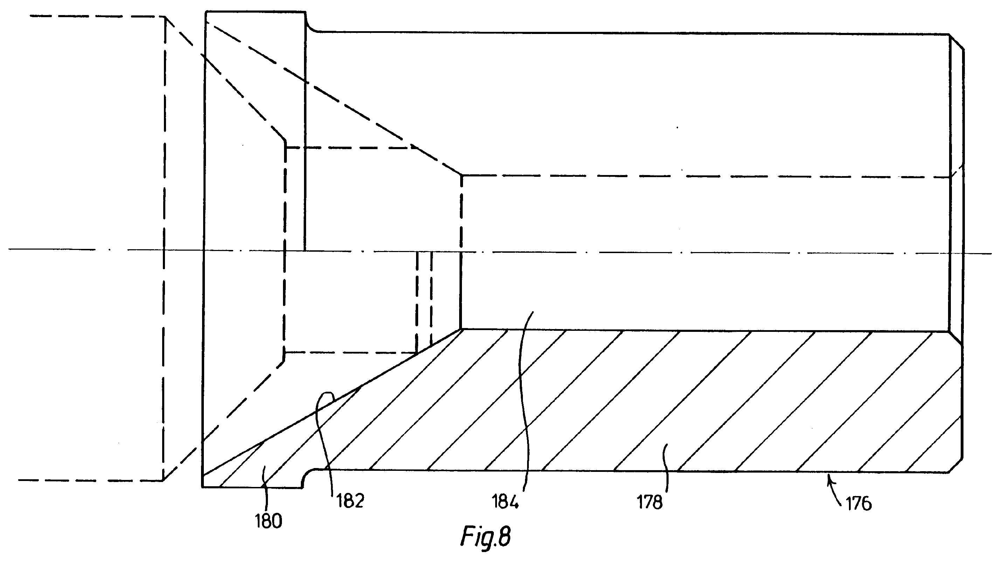

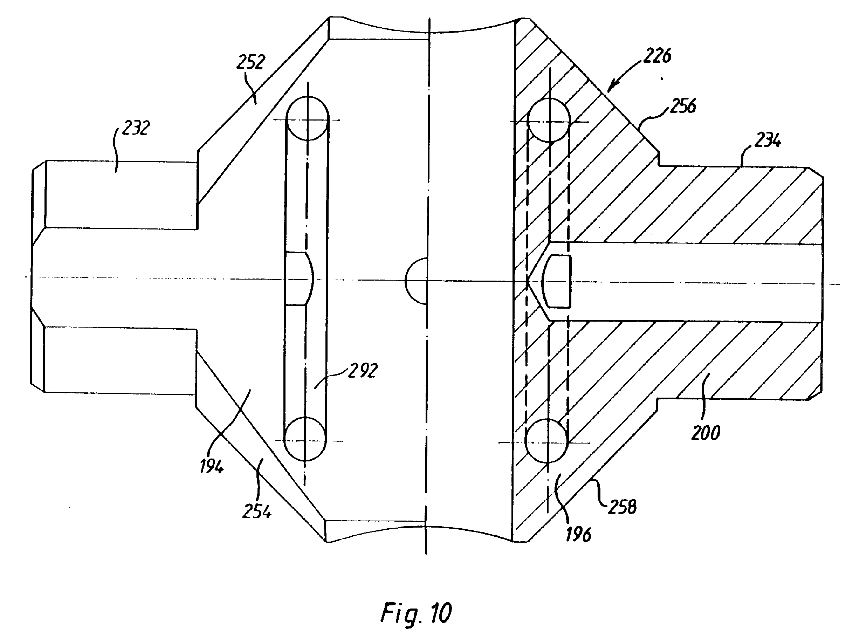

Die Figuren 6 und 7 zeigen für sich den Kontakt 128 mit der Abschirmscheibe 204. Fig. 8 zeigt den gegenüberliegenden Kontakt.

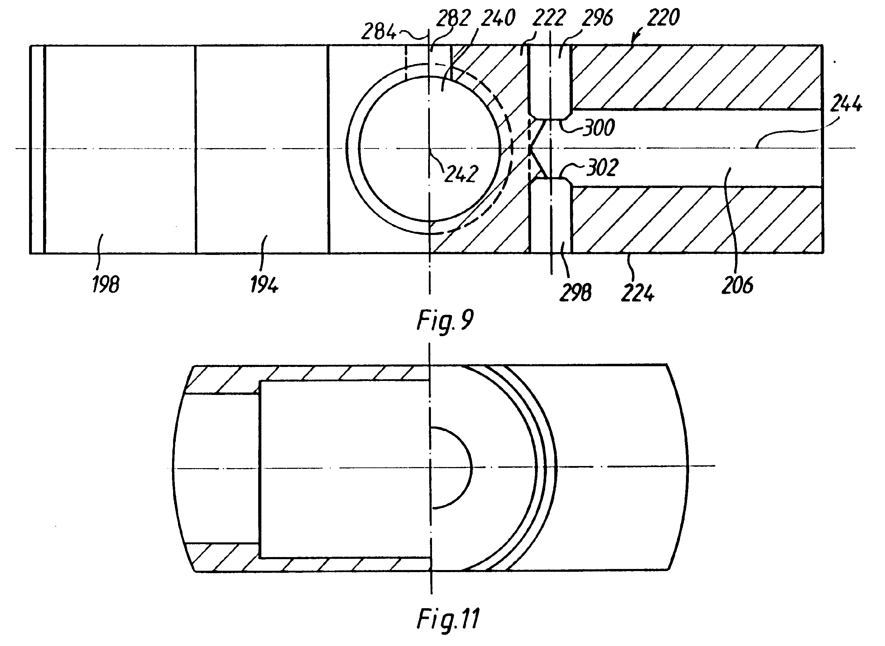

In den Figuren 9 bis 11 ist der Ofen 130 im einzelnen dargestellt.

Bei dem Ofen von Fig. 9 bis 11 ist mit 220 ein Graphitstück bezeichnet, das in seiner Grundform eine Platte mit einer oberen planen Fläche 222 und einer unteren planen Fläche 224 bildet. Das Graphitstück 220 weist einen Mittelteil 226 auf, der in Draufsicht im wesentlichen die Form eines regelmäßigen Achtecks besitzt. An zwei diametral gegenüberliegenden Seiten dieses Achtecks sitzen Ansätze, welche die Kontaktstücke 198 und 200 bilden. Diese Kontaktstücke 198 und 200 haben zylindrische Mantelflächen 232 bzw. 234, sind aber oben und unten durch die planen Flächen 222 bzw. 224 begrenzt und dadurch abgeflacht. Die Kontaktstücke 198 und 200 weisen die konischen Kontaktflächen 186 bzw. 188 auf. Mit diesen Kontaktflächen 186 und 188 ist der Ofen 130 zwischen den geräteseitigen Kontakten 128 und 176 gehalten, über welche die Stromzufuhr erfolgt.

Die zu Seiten mit den Kontaktstücken 198, 200 senkrechten Seiten des Achtecks sind durch eine Bohrung 240 verbunden. Die Achse 242 der Bohrung 240 verläuft senkrecht zu der Achse 244 der Kontaktstücke. Der Teil des Mittelteils 226 zwischen den durch die Bohrung 240 verbundenen Seiten bildet den Ofenkörper 42.

Zu beiden Seiten schließen sich an den Ofenkörper 42 die Kontaktrippen 194 und 196 an. Die Kontaktrippen 194 und 196 sind in der Draufsicht von Fig. 10 trapezförmig. Die Kontaktrippen 194 und 196 sind oben und unten durch die planen Flächen 222 und 224 und an den Seiten durch schräg verlaufende Seitenflächen 252, 254 bzw. 256, 258 begrenzt. Die lange Parallelseite des Trapezes grenzt jeweils an den Ofenkörper 42 an. Die schmale Parallelseite des Trapezes ist jeweils die ersterwähnte Seite des Achtecks und trägt das Kontaktstück 198 bzw. 200. Die Kontaktrippen 194 und 196 weisen Bereiche von vermindertem Querschnitt auf.

Bei dem Ofen nach Fig. 9 bis 11 erfolgt die Verminderung des des Querschnitts für die Stromzufuhr längs des mittleren Bereichs des Ofenkörpers 42 durch Schlitze 292 und 296, 298 in den planen Flächen 222 und 224. Die Schlitze sind parallel zur Achse 242 des Ofenkörpers 42 und enden im Abstand von den Seitenflächen 252, 254 bzw. 256, 258. Wie aus Fig. 9 ersichtlich ist, werden die Schlitze, z. B. 296 und 298 von den Schutzgaskanälen, z.B. 206, angeschnitten. Das über die Schutzgaskanäle zuströmende Schutzgas tritt daher durch Öffnungen 300 und 302 in die Schlitze 296, 298 und tritt durch diese Schlitze auf beiden Seiten und längs des gesamten Ofenkörpers 42 aus.

Die Schutzgaskanäle 206 verlaufen in den Kontaktstücken 198 und 200 längs der Achse 244. Die Schutzgaskanäle erstrecken sich bis in den Mittelteil 226. Wenn über die Schutzgaskanäle Schutzgas aus den geräteseitigen Kontakten 128, 176 über die Schutzgaskanäle 206 zugeführt wird, wird dieses Schutzgas über die Schlitze 296, 298 verteilt und umspült den Ofen 130 von allen Seiten. Dadurch wird Luftzutritt zu dem Ofen und damit ein Verbrennen des Ofens bei den hohen Atomisierungstemperaturen verhindert.

Durch die Verringerung des Querschnittes für die Strom- zufuhr im mittleren Bereich des Ofenkörpers 42 wird eine besonders gleichmäßige Temperaturverteilung erreicht.

Der Ofenkörper 42 weist eine Eingabeöffnung 282 auf, durch welche eine zu analysierende Probe in den Ofen eingegeben werden kann. Die Achse 284 der Eingabeöffnung 282 ist senkrecht zu den Achsen 242 und 244 des Ofenkörpers 42 und der Kontaktstücke 198, 200.

## Patentansprüche

1. Atomabsorptions - Spektrometer mit elektrothermischer Atomisierung der Probe und Untergrundkompensation durch Ausnutzung des Zeeman - Effektes,
enthaltend:
(a) einen Ofen (130) für die elektrothermische Atomisierung der Probe, der
- eine die Probe aufnehmende, längs einer ersten Achse (242) verlaufende Bohrung (54) aufweist, durch welche das Meßlichtbündel (18) hindurchtritt,
- Kontaktstücke (198,200) aufweist, die sich längs einer senkrecht zu der ersten Achse (242) verlaufenden zweiten Achse (244) auf beiden Seiten der Bohrung (54) erstrecken, und
- an den Kontaktstücken (198, 200) zwischen Kontakten (128, 176) gehalten ist, die gleichachsig zu den Kontaktstücken (198,200) angeordnet und mit Stromzuleitungen verbunden sind und über welche ein Heizstrom durch den Ofen quer zur ersten Achse (242) der Bohrung (54) zuführbar ist,
(b) einen schaltbaren Magneten (44), der Polschuhe (46,48) mit fluchtenden Durchbrüchen (50,52) zum Durchtritt des Meßlichtbündels (18) aufweist zur Erzeugung eines Magnetfeldes in dem Ofen, das parallel zur Laufrichtung des Meßlichtbündels (18) verläuft, so daß beim Einschalten des Elektromagneten (44) ein longitudinaler Zeeman-Effekt der Absorptionslinien der Probe eintritt,
**dadurch gekennzeichnet, daß**
(c) an den Polschuhen (48,50) ein Kontaktträger (96) gehaltert ist, der einen seitlich von dem Meßlichtbündel (18) angeordneten ersten Block (110) mit einer koaxial zu der zweiten Achse (244) verlaufenden Bohrung (112) aufweist,
(d) ein zweiter Block (158) zwischen einer Schließstellung und einer Offenstellung, in der der Ofen ausgetauscht werden kann, bewegbar ist, wobei der Block (158) eine Bohrung (172) aufweist, welche in der Schließstellung des zweiten Blockes (158) mit der Bohrung (112) des ersten Blockes (110) im Kontaktträger (96) fluchtet,
(e) in den Bohrungen (112, 172) des ersten und zweiten Blocks je einer der Kontakte (128, 176), die jeweils einen Schaft (132, 178) und einen Kopf (134, 180) am Ende des Schafts (132, 178) aufweisen, mit dem Schaft (132, 178) gehaltert ist,
(f) die Köpfe (134, 180) an ihren einander in Schließstellung des zweiten Blocks (158) zugewandten Stirnflächen Ausnehmungen (136,182) mit Kontaktflächen für die Kontaktstücke (198,200) des Ofens (54) aufweisen, wobei die Kontakte (128,176) in Schließstellung des zweiten Blocks (158) mit ihren Ausnehmungen (136, 182) einen den Ofen (130) aufnehmenden Hohlraum bilden, in den über die Kontakte Schutzgas eingeleitet wird, und
(g) der im ersten Block gehalterte Kontakt (128) durch eine Abschirmscheibe (204) gegen den daran angrenzenden Polschuh (48) thermisch isoliert ist.

2. Atomabsorptions-Spektrometer nach Anspruch 1, **dadurch** **gekennzeichnet, daß**
(a) in der Bohrung (112) des Blockes (110) des Kontaktträgers (96) ein Einsatz (114) mit Nuten (116) auf seiner Außenfläche sitzt, wobei die Nuten (116) mit der Innenfläche der Bohrung einen Kühlkanal bilden, der mit einem Einlaß (118) und einem Auslaß (120) für eine Kühlflüssigkeit verbunden ist,
(d) durch den Einsatz (114) sich eine Axialbohrung (126) erstreckt, in welcher der zugehörige Kontakt (128) sitzt,
(c) in der Bohrung (160) des bewegbaren Biocks (158) ein Einsatz (162) mit Nuten (164) auf seiner Außenfläche sitzt, wobei die Nuten (164) mit der Innenfläche der Bohrung einen Kühlkanal bilden, der mit einem Einlaß (166) und einem Auslaß (168) für eine Kühlflüssigkeit verbunden ist, und
(d) durch den Einsatz (162) sich eine Axialbohrung (172) erstreckt, in welcher der zugehörige Kontakt (176) sitzt.

## Claims

1. Atomic absorption spectrometer including electrothermal sample atomisation and background correction by utilizing the Zeeman effect, comprising:
(a) a furnace (130) for electrothermal sample atomization and which
- has a bore (54) which receives the sample and extends along a first axis (242) and through which a measuring light beam (18) passes,
- contains contact pieces (198,220) which extend on both sides of the bore (54) along a second axis (244) extending perpendicular to the first axis (242), and
- is held at the contact pieces (198,200) between contacts (128,176) which are arranged coaxially with the contact pieces (198,200), which are connected to current supply conductors and by means of which a heating current can be supplied to the furnace transverse with respect to the first axis (242) of the bore (54),
(b) a switchable magnet (44) having pole pieces (46,48) which contain aligned apertures (50,52) for through-passing the measuring light beam (18), in order to generate within the furnace a magnetic field which extends parallel to the travelling direction of the measuring light beam (18) so that, upon energizing the electromagnet (44), the absorption lines of the sample are subject to a longitudinal Zeeman effect,
**characterised in that**
(c) a contact carrier (96) is retained at the pole pieces (48,50) and contains a first block (110) which is disposed laterally of the measuring light beam (18) and includes a bore (112) extending coaxially with the second axis (244),
(d) a second block (158) movable between a closing position and an open position in which the furnace can be exchanged, said block (158) having a bore (172) which is aligned with the bore (112) of the first block (110) of the contact carrier (96) in the closing position of the second block (158),
(e) the contacts (128,176) which respectively have a shaft (132,178) and a head (134,180) at an end of the respective shaft (132,178), are retained in bores (112,172) of respective ones of the first and second blocks by means of the respective shafts (132,178),
(f) the heads (134,180) have respective recesses (136,182) with contact surfaces for the respective contact pieces (198,200) of the furnace (54) at their end faces which face each other in the closing position of the second block (158), said contacts (128,176) and their recesses (136,182) forming a cavity which receives the furnace in the closing position of the second block (158) and into which protective gas is passed through the contacts, and
(g) the contact (128) retained in the first block is thermally insulated from the adjoining pole piece (48) by means of a shielding disc.

2. Atomic absorption spectrometer according to claim 1, **characterised in that**
(a) an insert (114), which is provided with grooves (116) at its outer surface, is seated in the bore (112) of the block (110) of the contact carrier (96), said grooves forming, conjointly with the inner surface of the bore, a cooling passage connected to an inlet (118) and an outlet (120) for a cooling liquid,
(b) an axial bore (126) extends through the insert (114) and the associated contact (128) is seated in the axial bore,
(c) an insert (162), which is provided with grooves at its outer surface, is seated in the bore (160) of the movable block (158), said grooves forming, conjointly with the inner surface of the bore, a cooling passage connected to an inlet (166) and an outlet (168) for a cooling liquid, and
(d) an axial bore (172) extends through the insert (162) and the associated contact (176) is seated in the axial bore.

## Revendications

1. Spectromètre à absorption atomique avec l'atomisation électrothermique de l'échantillon et la compensation de fond par l'utilisation de l'effet Zeeman,
comprenant:
(a) un four (130) destiné à l'atomisation électrothermqiue de l'échantillon, qui
- présente un alésage (54) s'étandant le long d'un premier axe (242) et recevant l'échantillon, alésage par lequel passe le faisceau lumineux de mesure (18),
- présente des pièces de contact (198,200) s'étendant le long d'un second axe (244) perpendiculaire au premier axe (242) sur les deux côtés de l'alésage (54), et
- est tenu aux pièces de contact (198,200) entre des contacts (128,176) disposés équiaxialement aux pièces de contact (198,200) et reliés à des conduites d'alimentation de courant, contacts par lesquels un courant de chauffage est susceptible d'être conduit à travers le four transversalement au premier axe (242) de l'alésage (54),
(b) un aimant commutable (44) muni de pièces polaires (46,48) ayant des percements alignés (50,52) destinés au passage du faisceau lumineux de mesure (18) afin d'engendrer un champ magnétique dans le four, champ magnétique qui est parallèle au sens de marche du faisceau lumineux de mesure (18) de sorte qu'en mettant l'électroaimant (44) en circuit, un effet Zeeman longitudinal des lignes d'absorption de l'échantillon apparaît,
caractérisé par le fait que
(c) un support de contact (96) est tenu aux pièces polaires (48,50), support qui présente un premier bloc (110) disposé latéralement au faisceau lumineux de mesure (18) et muni d'un alésage (112) coaxial au second axe (244),
(d) un second bloc (158) est susceptible d'être déplacé entre une position de fermeture et une position d'ouverture, dans laquelle le four peut être échangé, le bloc (158) présentant un alésage (172) aligné sur l'alésage (112) du premier bloc (119) dans le support de contact (96) dans la position de fermeture du second bloc (158),
(e) dans les alésages (112,172) du premier et du second bloc, l'un des contacts (128, 176) présentant une tige (132,178) et une tête (134,180) à l'extrémité de la tige (132,178) chacun, est respectivement tenu avec la tige (132,178),
(f) sur leurs fronts en face l'un de l'autre dans la position de fermeture du second bloc (158), les têtes (134,180) présentent des creux (136, 182) avec des surfaces de contact pour les pièces de contact (198,200) du four (54) , les contacts (128,176) formant dans la position de fermeture du second bloc (158) avec leurs creux (136,182) une cavité recevant le four (130), cavité dans laquelle du gaz protecteur est introduit par les contacts, et
(g) le contact (128) tenu dans le premier bloc est thermiquement isolé à la pièce polaire adjacente (48) par un disque de blindage (204).

2. Spectromètre à absorption atomique selon la revendication 1, caractérisé par le fait que
(a) une insertion (114) munie de rainures (116) sur sa surface extérieure est située dans l'alésage (112) du bloc (110) du support de contact (96), les rainures (116) formant avec la surface intérieure de l'alésage un canal refroidisseur relié à une entrée (118) et une sortie (120) pour un liquide refroidisseur,
(b) un alésage axial (126) s'étend par l'insertion (114), alésage dans lequel est situé le contact associé (128),
(c) une insertion (162) munie de rainures (164) sur sa surface extérieure est située dans l'alésage (160) du bloc mobile (158), les rainures (164) formant avec la surface intérieure de l'alésage un canal refroidisseur relié à une entrée (166) et une sortie (168) pour un liquide refroidisseur, et
(d) un alésage axial (172) s'étend par l'insertion (162), alésage dans lequel est situé le contact associé (176).
